# EUROPEAN PATENT APPLICATION

(11) **EP 3 639 951 A1**
(43) Date of publication of application: **22.04.2020**
(21) Application number: 18200950.6
(22) Date of filing: 17.10.2018
(51) Int. Cl.: B22F 3/105, B33Y 30/00

(54) **RECOATER HEAD FOR LOCALIZED DEPOSITION OF A POWDERY BASE MATERIAL IN ADDITIVE MANUFACTURING**

(71) Applicant: Siemens Aktiengesellschaft, 80333 München (DE)
(72) Inventor: Geisen, Ole, 10781 Berlin (DE)

(57) **Abstract**

A recoater head (11) for powder bed based additive manufacturing is presented, the recoater head being configured to be moved over a manufacturing plane (MP), wherein the recoater head (11) comprises a powder outlet (12) and a closed, particularly at least partially circular, wiper (13) enclosing the powder outlet (12), wherein the wiper (13) is arranged and configured to locally deposit a powdery base material (P) on the manufacturing plane (MP). Further, a recoating apparatus, an arrangement and an according manufacturing device are presented.

## Description

The present invention relates to a recoater head or, as the case may be, a recoating apparatus, particularly for the powder bed based additive manufacturing of components via powder bed fusion processes. The recoater head is particularly designed for localized deposition of a powdery base material or powder e.g. in selective laser melting and/or electron beam melting processes. Further, a recoating apparatus, an arrangement and an according manufacturing device are presented.

The component to be manufactured preferably comprises a complex geometry and high-performance material, such as components applied in a turbo machine, e.g. in the flow path hardware of a gas turbine. The component may thus be made of a nickel- or cobalt-based superalloy. Alternatively, the component may be any other component, even a polymeric or ceramic component.

A method of selective laser melting is described in EP 2 601 006 B1, for example.

The term "additive" in the context of manufacturing shall particularly denote a layerwise, generative and/or bottom-up manufacturing process.

Additive manufacturing and/or powder bed fusion methods have proven to be useful and advantageous in the fabrication of prototypes or complex components, such as components with a complex, mazelike or convoluted structure or functionally cooled components. Further, the additive manufacture stands out for its short chain of process steps which in turn enables material economization and a particularly low lead time. Powder-bed-based or powder bed fusion (PBF) manufacturing methods, such as selective laser melting (SLM), selective laser sintering (SLS) or electron beam melting (EBM) are relatively well-known methods for fabricating, prototyping or manufacturing parts or components from a powdery base material. Conventional apparatuses or setups for such methods usually comprise a manufacturing or build platform on which the component is built layer-by-layer after the feeding of a layer of base material which may then be melted, e.g. by the energy of a laser beam and subsequently solidified. The layer thickness is determined by a recoater that moves, e.g. automatically, over the powder bed and removes excess material from a manufacturing plane or build space. Typical layer thicknesses amount to between 20 µm and 40 µm. During the manufacture, said laser beam scans over the surface and melts the powder on selected areas which may be predetermined by a CAD-file according to the geometry of the component to be manufactured.

When considering the mentioned powder bed fusion processes, it is still a very challenging task to achieve a deposit of varying material properties or in a locally defined manner. As well, building up a structure of a plurality of base materials in the same build job or to provide the component to be manufactured with different structural or chemical properties and/or compositional gradients is almost impossible up to now, at least for high performance components, as stoichiometry must be controlled very thoroughly in order avoid impurities and contamination of the powder bed.

It is an object of the present invention to provide means with which powder bed fusion processes can be made more versatile and e.g. multi-material deposition and buildup is achieved in a controllable way.

The mentioned object is achieved by the subject-matters of the independent claims. Advantageous embodiments are subject-matter of the dependent claims.

An aspect of the present invention relates to a recoater head for powder-bed-based additive manufacturing.

The recoater head is configured to be moved over a manufacturing plane, i.e. a plane onto which a subsequent layer or amount of base material is to be deposited for the additive or layerwise buildup of the respective component. In other words, the manufacturing plane is that one plane which is recoated consistently during the additive buildup of the component. Thus, the manufacturing plane may be formed by the base material of the powder bed or by an already solidified section of the component. In an initial stage of the buildup, the manufacturing plane may be even formed by an underlying substrate or platform. During the additive buildup, the manufacturing plane, preferably, denotes a plane extending over the whole powder bed and including sections of mere powder and sections of already solidified material, i.e. the structure of the component.

The recoater head comprises a powder outlet. Via the powder outlet, the powder or base material is, preferably, delivered towards or onto the manufacturing plane.

The recoater head further comprises a closed and, particularly, at least partially circular wiper which encloses or enframes the powder outlet.

The recoater head is expediently arranged and configured to locally deposit the powder or powdery base material on or onto the manufacturing plane e.g. for the additive manufacture of the respective component.

Via the shape, preferably the closed, curved or circular, or elliptical shape of the wiper, a material deposition can be implemented site-specific onto the manufacturing plane without the need to coat the manufacturing plane as a whole, as is usual in conventional powder bed fusion processes. At the same time an uncontrolled deposition and uncontrolled contamination can be avoided, according to the presented solution, as the wiper provides beside the deposition or recoating functionality also a dosing functionality with which the deposition of the powder on the manufacturing plane can locally be delimited.

The presented recoater head, thus, differs from conventional recoating means, which usually comprise a straight or unidirectional or even blade or scraper and with which only a full and widespread layer of base material may be distributed. If in conventional apparatuses only a part of the manufacturing plane would be coated, an excess of material would result on the (remaining) powder bed. In other words, the deposition cannot be locally controlled, as, usually, said wiper spreads the powder from a reservoir towards an excess container, in between of which the actual manufacturing plane lies. This arrangement or geometry is particularly illustrated in the Figures of DE 10 2016 201 290 A1.

As multi-material deposition is achieved via the provided recoater head, additive manufacturing capabilities are significantly improved and novel and customized high-performance components, comprising gradients in their chemical and physical properties, may be provided via the present invention. Thus, the anyway disruptive potential of additive manufacturing may still be expanded to design with user-defined and inhomogeneous properties.

The wiper may fully or partially border or enframe the powder outlet or a volume around the powder outlet. Thus, the material deposit may be locally confined.

The term "locally" as used herein in conjunction with the deposition of the powder preferably means that the deposition may be performed on an area which is significantly smaller than the manufacturing plane.

In an embodiment the wiper protrudes from the outlet. According to this embodiment, a volume or cavity may be defined around the outlet, wherein, outside of this volume and (uncontrolled) material deposition is avoided.

In an embodiment, when the recoater head is approached to the manufacturing plane during the additive manufacture of the component, the wiper forms a cavity or volume for retaining base material prior to its deposition.

In an embodiment, the volume of the cavity defines the, preferably minimum, volume of the base material to be deposited, particularly layerwise or stepwise, onto the manufacturing plane. This is particularly achieved by the closed or almost closed shape of the wiper. Said volume may, thus, amount to a minimum powder dose or aliquot. The smaller the enclosed area or volume is, the better or more accurate is particularly the spatial resolution and thus the achievable dose (resolution) of the material or material deposit.

In an embodiment, the wiper is circular in shape. This embodiment particularly allows for an equally resolved material deposit in different directions of the manufacturing plane, particularly in X- and Y-direction which directions may span or delimit the corresponding manufacturing plane laterally.

In an embodiment the wiper is or comprises a brush, a lip or a blade.

In an embodiment, the wiper is elliptical in shape. This embodiment is expedient and advantageous, when e.g. in one lateral direction of the manufacturing plane or powder bed a larger or wider deposition shall be achieved. Said lateral direction would in this case correspond to a direction parallel to the smaller one of the semiaxes of the according ellipse.

Along a direction corresponding to or parallel to the larger semiaxis of the ellipse, and narrower or finer resolved material deposit would be achieved which may as well be required for a particular manufacturing application or build job.

In an embodiment, a dimension of the wiper is at least five times smaller than a dimension of manufacturing plane. Said dimension may pertain to a diameter of the wiper.

In an embodiment, a dimension of the wiper is at least 10 times smaller than a dimension of manufacturing plane.

In an embodiment, a dimension of the wiper is at least 50 times smaller than a dimension of manufacturing plane.

In an embodiment, a dimension of the wiper is at least 100 times smaller than a dimension of manufacturing plane.

In an embodiment, a dimension of the wiper is at least 300 times smaller than a dimension of manufacturing plane.

In an embodiment the recoater head comprises a powder feed or inlet, e.g. at an upper surface of the head. The powder feed may be or comprise a hose for providing the powder, e.g. from a powder reservoir to the recoater head.

A further aspect of the present invention relates to a recoating apparatus comprising a plurality of recoater heads as described above. Each or at least some of these recoater heads can preferably be controlled separately, independently and/or operated with differing or different base materials in order to provide for a multi-material deposition in the powder bed based additive manufacture.

A further aspect of the present invention relates to an arrangement comprising a plurality of recoating apparatuses as described above. Each or at least some of the recoater heads of the plurality of the apparatuses are independently movable over the manufacturing plane in order to locally deposit the powdery base material. This particularly allows on one hand for multi-material deposition as described above. Further, a very versatile and intelligent buildup strategy is provided, and the corresponding component may e.g. be built up, refurbished or repaired at many different sites, e.g. different or opposing sides of the component which show wearing.

A further aspect of the present invention relates to an additive manufacturing device comprising an apparatus and/or an arrangement as described above, wherein the device further comprises an irradiation unit, such as an electron or laser beam for the powder bed based additive manufacture.

Advantages and embodiments relating to the described recoater head may as well pertain or are valid with regard to the recoating apparatus, the arrangement and/or the manufacturing device as described.

Further features, expediencies and advantageous embodiments become apparent from the following description of the exemplary embodiment in connection with the Figures.
Figure 1 shows a schematic sectional view of the manufacturing device comprising a recoating head according to the present invention.
Figure 2 shows a detailed schematic sectional view of the recoating head.
Figure 3 shows a simplified bottom view of the recoating head.
Figure 4 shows a simplified sketch of a manufacturing plane and indicating application modi of the recoating head.
Figure 5 shows a simplified bottom view of a recoating apparatus comprising a plurality of recoating heads.
Figure 6 shows an alternative embodiment of the recoating had according to the present invention.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

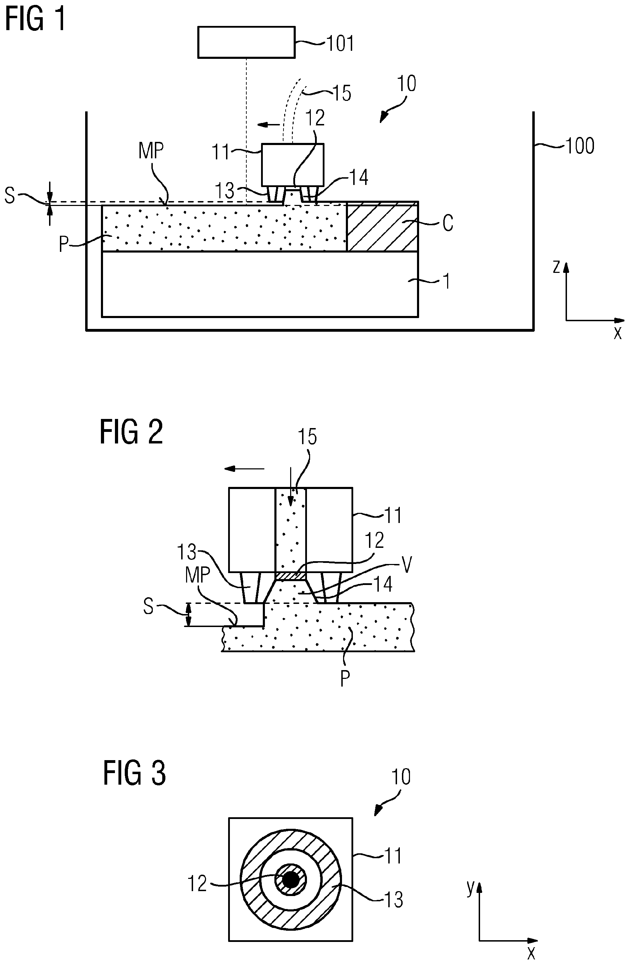

Figure 1 shows a schematic sectional view of an additive manufacturing device 100. The device 100 is preferably at least to some extend a conventional powder bed fusion device or apparatus, such as a device for manufacturing components by selective laser sintering (SLS), selective laser melting (SLM) or electron beam melting (EBM).

Such techniques comprise layerwise the selective irradiation of a powder or powder bed P by an irradiation unit, denoted with reference numeral 101 in Figure 1. Accordingly, such unit may be or comprise a laser source or an electron source or emitter. A corresponding laser or electron beam is illustrated by the dashed vertical line in Figure 1 originating from the unit 101 and arranged to expose the powder bed P. The manufacture of a corresponding component C functions in that different layers (cf. reference numeral S), e.g. with thicknesses (cf. also reference numeral S) are consistently irradiated, wherein, after the irradiation of each layer, of fresh powder layer S is newly deposited or recoated. Said thickness S may amount to several micrometers or millimeters, such as, e.g. values in the range of 10 to 100 µm, preferably 20 to 40 µm.

It is illustrated in Figure 1 that the component C has been manufactured at the right side of the illustration. An additional (single) layer of powder is actually being deposited on a manufacturing plane MP in that the recoater head 11 is moved from right to left over the manufacturing plane MP as indicated by the arrow.

Said component C is thereby directly built on top of a build plate or platform 1 to which the component is inherently adhesively or structurally connected. During the manufacture of metallic components, the base plate regularly serves for a mechanical support of the component against distortion which may arise due to the large thermal gradients which are involved in the additive buildup.

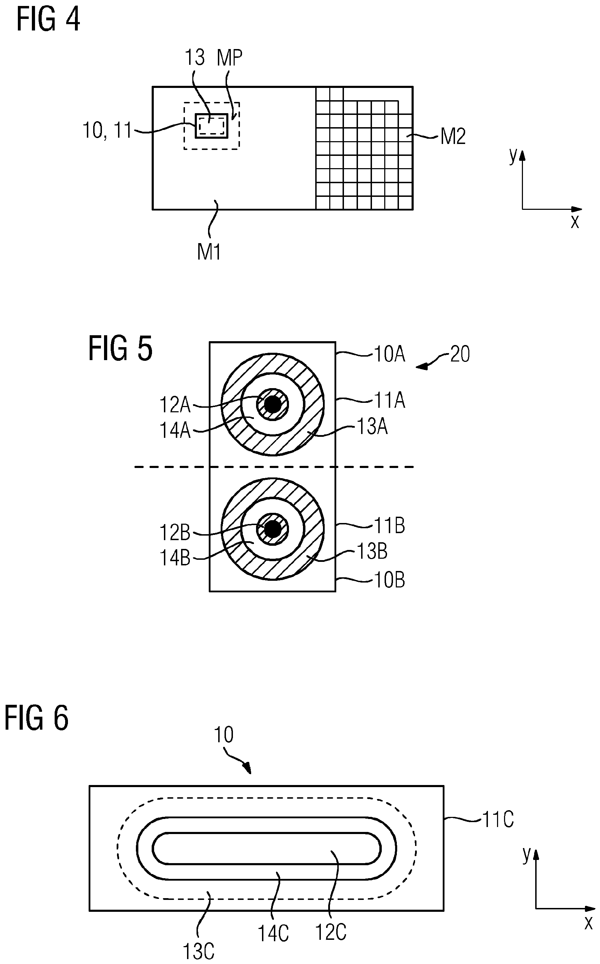

It is further inherent to the given powder bed fusion methods that the component C is manufactured according to a build direction which corresponds to the vertical Z-direction in Figure 1 (see coordinates on the right in Figure 1). Thus, a powder bed P or the corresponding manufacturing plane MP (cf. Figures 2 and 4) extends in lateral X- and Y- direction(s).

The present invention now focuses particularly on the recoater head 11 which may be part of a recoating apparatus 10 (see below). The recoating apparatus 10 as shown in Figure 1 comprises a recoater head 11. The recoater head 11 further comprises a powder outlet 12. With the powder outlet 12, base material P may preferably be applied to the manufacturing plane MP (cf. Figure 2).

As shown in Figure 2 in more detail, the apparatus 10 or recoating head 11 may further comprise a powder feed or inlet 15 via which the powder may be delivered to the head 11, e.g. from a powder reservoir (not explicitly indicated in the Figures).

The recoater head 11 further comprises a wiper 13. The wiper 13 has preferably a closed shape or contour (cf. figures 3 and 5 below). Preferably, said wiper 13 has a circular shape.

Alternatively, said wiper 13 may have an elliptical shape or and only partly closed, such as almost closed and curved, shape.

The wiper 13 further encloses the powder outlet 12 circumferentially. According to this configuration, the recoating head 11 or, as the case may, be the wiper 13 is arranged and configured to locally deposit the powder P on the manufacturing plane MP in a spatially resolved or localized manner. To this effect, the wiper 13, when approached to the manufacturing plane MP in the actual additive manufacturing process, forms a cavity and/or defines a volume (cf. reference numeral V in Figure 2). Said cavity or volume is preferably provisioned for retaining a dose or an aliquot of the powdery base material P prior to its deposition.

Said dose or aliquot may define a minimum volume of base material which can be deposited by the presented means. Particularly, the definable amount or volume of powder P allows to prevent the recoating process from depositing excessive powder amounts, e.g. amounts which may not be handled or removed from the manufacturing plane MP in a controlled way.

The wiper 13 may comprise or constitute a brush, lip or a blade according to the actual requirement and manufacturing technique. For instance, brushes may be more favorable when the recoating processes is prone to damage parts of the recoater or the component. Whereas a blade as a wiper may provide for a better flatness or evenness of the recoated layer of powdery base material P.

As seen in more detail in Figure 2, the wiper 13 (or the head 10) comprises further an inner surface or lip 14 which - together with the powder outlet face (not explicitly indicated) and the manufacturing plane MP - defines the volume V.

Figure 3 shows a bottom view of the recoater head 11 indicating particularly the circular contour of the wiper 13 which (coaxially) surrounds or encloses the powder outlet 12. The extensions of the head expediently relate to the X- and Y-direction, i.e. also the main extensions of the manufacturing plane MP, when the recoater head is operated in a manufacturing device (cf. Figure 1).

According to an embodiment of the present invention, the dimension of the wiper, such as a diameter thereof, is preferably at least 5 times smaller than a dimension of the corresponding powder bed or manufacturing plane MP, e.g. of a powder bed or manufacturing plane of conventional powder bed fusion manufacturing devices.

More preferably, the dimension of the wiper 13 is at least 10 times smaller than a dimension of the said powder bed or manufacturing plane in order to increase a spatial resolution of the recoating or deposition process.

More preferably, the dimension of the wiper 13 is at least 50 times smaller than a dimension of the said powder bed or manufacturing plane in order to further increase spatial resolution in the process.

More preferably, the dimension of the wiper 13 is at least 100 times smaller than a dimension of the said powder bed or manufacturing plane in order to still further increase spatial resolution in the process.

More preferably, the dimension of the wiper 13 is more than 100 times, such as 300 times or more, smaller than a dimension of the said powder bed or manufacturing plane in order to still further increase spatial resolution.

For instance, when a conventional extension of the manufacturing plane corresponds to 0.3 meters in X- and/or Y-direction, the dimension or extension of the wiper 13 may - according to the present invention - amount to below 100 micrometers, such as 50 µm, for instance.

Figure 4 schematically illustrates a recoating process in the additive manufacture of a component C with the aid of the presented recoating head 11. The sketch shows a top view image onto the manufacturing plane MP of a manufacturing device 100. It is shown, that an extension of the wiper 13 is at least 5 times smaller than an extension of the manufacturing plane MP. Further, it is apparent that multi-material deposition is feasible with the presented recoating head 11, as, on the left side of Figure 4, a first powdery material M1 may be locally deposited in the area enclosed by the dashed square. Afterwards or concurrently, a second powdery material M2 (cf. also Figures 5 and 6) which may differ in constitution and properties from the material M1 may be deposited on the right part of the manufacturing plane MP via a like recoating head (for the sake of simplicity not explicitly indicated).

Figure 5 shows an arrangement 20 comprising exemplarily two like recoating apparatuses 10A and 10B, each of which comprising a recoater head (cf. numerals 11A and 11B) and the corresponding outlets and wipers (cf. numerals 12A, 12B, 13A, 13B, 14A and 14B).

The dashed line separating said recoater heads 11A and 11B of the recoating apparatuses 10A and 10B shall indicate that said recoater heads 11A and 11B may either be coupled or fixed to each other or may as well be independently and separately movable and operable, e.g. with differing base materials. Consequently, it is achieved that the component C may - in the same manufacturing process - be buildup with different materials and even at different locations. The strategy for the manufacture may to this effect readily be determined by the corresponding CAD file and the preparatory CAM strategy comprising the determining of material and irradiation parameters.

Figure 6 shows an alternative embodiment of the recoater head, wherein the wiper 13 comprises an elliptical shape as compared to the circular ones of the previous embodiments. Such an embodiment may as well be advantageous, e.g. in case that a spread of the deposit in the lateral Y-direction shall be greater than that one of the (finer resolved) X-direction as shown in Figure 6.

As well, it is feasible according to all of the described embodiments that a material is switched during the recoater head's operation, e.g. when using only a single recoater head.

The presented recoater head or recoating apparatus further stands out for the possibility to be readily implemented and applied to state-of-the-art additive manufacturing machinery.

The component as referred to herein may particularly relate to a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Recoater head (11) for powder bed based additive manufacturing configured to be moved over a manufacturing plane (MP), wherein the recoater head (11) comprises a powder outlet (12) and a closed, particularly at least partially circular, wiper (13) enclosing the powder outlet (12), wherein the wiper (13) is arranged and configured to locally deposit a powdery base material (P) on the manufacturing plane (MP).

2. Recoater head (11) according claim 1, wherein the wiper (13) protrudes from the outlet and, when the head (11) is approached to the manufacturing plane (MP), the wiper forms a cavity for retaining base material prior to its deposition.

3. Recoater head (11) according to claim 2, wherein a volume (16) of the cavity defines the, particularly minimum, volume (s) of base material (P) to be deposited layerwise onto the manufacturing plane (MP).

4. Recoater head (11) according to one of the previous claims, wherein the wiper (13) is circular in shape.

5. Recoater head (11) according to one of the previous claims, wherein a dimension of the wiper (13) is at least 5 times smaller than a dimension of manufacturing plane (MP).

6. Recoater head (11) according to one of the previous claims, wherein the wiper (13) is elliptical in shape.

7. Recoater head (11) according to one of the previous claims, wherein the wiper (13) is a brush, a lip or a blade.

8. Recoater head (11) according to one of the previous claims, further comprising a powder feed (15).

9. Recoating apparatus (10) comprising a plurality of recoater heads (11) according to one of the previous claims, wherein each of these recoater heads (11) can be controlled separately and operated with differing base materials (M1, M2) in order to provide a multi-material deposition in the powder bed based additive manufacture.

10. Arrangement (20) comprising a plurality of recoating apparatuses (10) according to one of the previous claims, wherein at least some of the recoater heads (11) of the plurality of apparatuses are independently movable over the manufacturing plane (MP) in order to locally deposit the powdery base material (P).

11. Manufacturing device (100) comprising an apparatus and/or an arrangement according to one of the previous claims, further comprising an irradiation unit (101).
